# EUROPÄISCHE PATENTSCHRIFT

(11) **EP 0 499 019 B1**
(45) Veröffentlichungstag und Bekanntmachung des Hinweises auf die Patenterteilung: **28.02.1996**
(21) Anmeldenummer: 92100040.2
(22) Anmeldetag: 03.01.1992
(51) Int. Cl.: B23K 11/04, E01B 29/46

(54) **Widerstandsschweissmaschine, insbesondere zum Abbrennstumpfschweissen von Schienen**
Resistance welding machine, particularly for resistance flash welding of rails
Machine de soudage par résistance, particulièrement pour le soudage par résistance par fusion

(30) Priorität: 13.02.1991 CH 448/91
(43) Veröffentlichungstag der Anmeldung: 19.08.1992
(73) Patentinhaber: H.A. SCHLATTER AG, CH-8952 Schlieren Zürich (CH)
(72) Erfinder: Zollinger, Hans-Rudolf, CH-8954 Geroldswil (CH)
(74) Vertreter: Keller, René, Dr.

(56) Entgegenhaltungen:
- CH-A- 632 948
- DE-C- 544 915
- DE-C- 637 305

## Beschreibung

Die Erfindung betrifft eine Widerstandsschweißmaschine.

Sie befaßt sich namentlich mit Widerstandsschweißmaschinen zum Abbrennstumpfschweißen von Eisenbahnschienen, wie sie zum Beispiel aus der CH-PS 632 948 bekannt waren.

Eine gattungsgemäße Widerstandsschweißmaschine ist aus der DE-C 637 305 bekannt. Die bekannte Schweißmaschine hatte Spannbacken für die miteinander zu verschweißenden Schienen, welche mittels kugeliger Gelenke mit einem die Schweißtransformatore tragenden, starren Tragbalken verbunden waren. Die bekannte Schweißmaschine ermöglichte ein Ausrichten der zu verschweißenden Schienenstirnflächen in lotrechter Richtung.

Eine weitere Schweißmaschine ist aus der DE-C 544 915 bekannt. Es wurden hier jedoch gelenkig angeordnete Kontakt- und Spannbacken verwendet, welche um eine gemeinsame Achse verschwenkbar waren. Die Kontaktbacke war jedoch in einem größeren Abstand von der Drehachse angeordnet als die Spannbacke, um die Spannkraft in verschieden große Komponenten derart zu zerlegen, daß deren kleinere auf die Kontaktbacke und deren größere auf die Spannbacke wirkte.

Im Rahmen der Erfindung wurde festgestellt, daß im Bereich der Auflageflächen der Elektroden auf der Lauffläche der Schienen überhitzte Kontaktstellen mit partiellen Gefügeänderungen auftraten. Durch die Beanspruchung beim Befahren der verschweißten Schienen können an diesen Stellen Metallpartikel ausbrechen, wodurch die Schienenqualität beeinträchtigt wird.

Aufgabe der Erfindung ist es, eine ausgezeichnete Qualität einer Stumpfschweißung zu erreichen und die Bildung von überhitzten Kontaktstellen zu vermeiden.

Die Lösung der Aufgabe wird aufgrund der reibungsfreien Lagerung, d. h. der Aufhängung der Baueinheit erreicht, welche ein extrem genaues und zur Vorschubrichtung seitenstabiles Verfahren des anzuschweißenden Schienenendes und eine exakt dosierbare Vorschubkraft während des Schweißvorgangs ermöglicht. Durch eine genaue Regelung des Schweißstroms, der Vorschubkraft und des Vorschubweges läßt sich eine ausgezeichnete Qualität der Schweißung erreichen.

Aufgrund der Beweglichkeit der Elektroden sind diese problemlos großflächig satt auf die Oberfläche des zu verschweißenden Werkstücks, hier der Eisenbahnschienen, anlegbar. Hierdurch ergibt sich ein annähernd gleichmäßiger Stromfluß über die Kontaktfläche in das Werkstück, wodurch überhitzte Kontaktstellen vermieden werden.

Im folgenden wird ein Beispiel der Erfindung anhand der Zeichnungen näher erläutert. Es zeigen:
- Fig. 1: eine Seitenansicht einer Schienenschweißmaschine mit entfernten Abdeckungen, um die für die Funktionsfähigkeit notwenigen Bauteile besser darstellen zu können,
- Fig. 2: eine Seitenansicht eines Elektrodenpaares der in **Figur 1** dargestellten Schweißmaschine, und
- Fig. 3: einen Querschnitt durch eine Elektrode mit Elektrodenträger des in **Figur 2** dargestellten Elektrodenpaares im vergrößerten Maßstab entlang der Linie III - III, wobei aufgrund des symmetrischen Aufbaus nur eine Hälfte der Elektrode gezeigt ist.

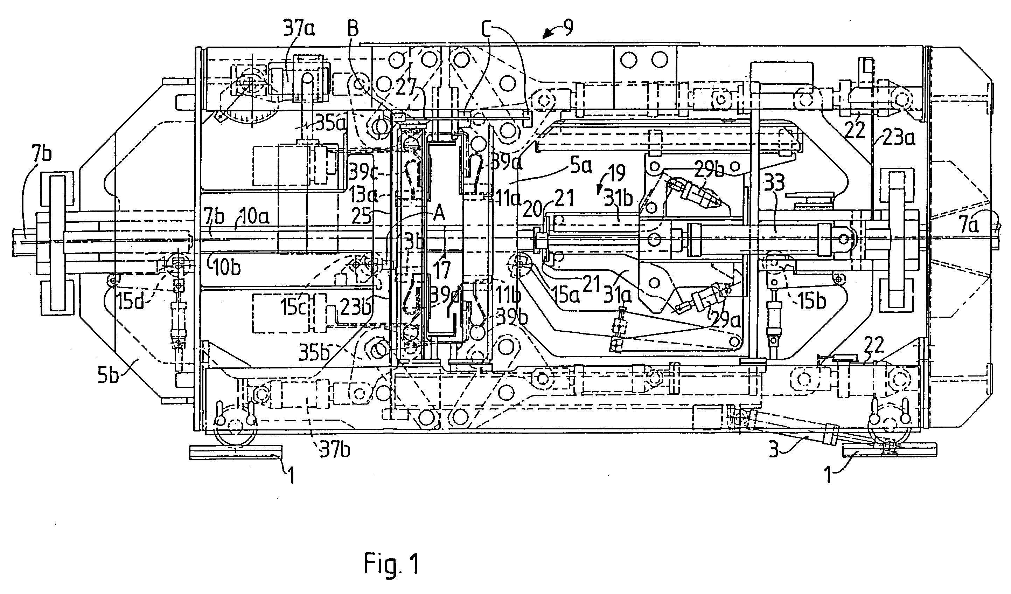

Die in **Figur 1** dargestellte Schienenschweißmaschine steht auf Schienen **1** und kann auf diesen mit einer Hydraulikkolbenzylindereinheit **3** um eine kleine Distanz verschoben werden, um beim Verschweißen von Langschienen die Schweißmaschine auf die zu verschweißende schienenstoßstelle mittig auszurichten.

Die Schienenschweißmaschine hat eine bewegliche Baueinheit **5a** zum Klemmen und zum Vorschub der einen **7a** der beiden miteinander zu schweißenden Schienen **7a** und **7b**. Die andere Schiene **7b** ist in einer mit dem Maschinengestell **9** verbundenen Baueinheit **5b** festgeklemmt. Die beiden Schienen **7a** und **7b** sind in jeder der Baueinheiten **5a** und **5b** durch nicht dargestellte, über Hebel seitlich an die Schienenstege anpreßbare Klemmbacken und am Schienenkopf und -fuß **10a** und **10b** angreifende, in **Figur 1** gestrichelt dargestellte Elektrodenpaare **11** und **13** in der Nähe der zu verschweißenden Schienenenden gehalten. Die beiden Schienen **7a** und **7b** sind zum Einschieben in die und Herausziehen aus den Baueinheiten **5a** und **5b** auf ihrem Schienenfuß **10b** über Rollen **15a** bis **15d** bewegbar. Der gegenseitige Abstand zweier Rollen **15a** und **15b** sowie **15c** und **15d** auf den jeweils eine Schiene **7a** bzw. **7b** bzw. deren Ende verschiebbar sind, beträgt nur etwas mehr als einen Meter, damit auch noch kurze Schienenstücke mit einer Länge von mindestens fünf Meter problemlos eingefahren werden können. Die Rolle **15a** ist nach unten wegklappbar, damit eine unten beschriebene Abgratvorrichtung **19** mit ihren Abgratmessern **20** und **21** zum Entfernen eines bei der Schweißung entstehenden Schweißgrates vorgeschoben werden kann. Die Rollen **15a** und **15c** dienen ferner dazu die Fahrfläche des Schienenkopfes **10a** der Schiene **7a** und **7b** gegen je einen nicht dargestellten Anschlag zu drücken. Dieser Anschlag wird so eingestellt, daß die beiden Schienenenden je nach Schienentyp einen Winkel zwischen einhundertachtzig und einhundertneunundsiebzig Grad miteinander bilden. D. h. die beiden schienenenden fluchten bzw. stehen dachfirstartig zueinander. Die Einstellbarkeit dieses Winkels je nach Schienentyp hat sich als vorteilhaft erwiesen, da der Schienenkopf **10a** gegenüber dem Schienensteg und dem Schienenfuß **10b** eine andere, meistens größere Wärmekapazität hat. Würden die beiden Schienenenden bei größerer Wärmekapazität des Schienenkopfes **10a** gegenüber dem Schienenfuß **10b** exakt fluchtend zusammengegeschweißten werden, so würden sich die Schienen **7a** und **7b** an der schweißstelle **17** nach dem Abkühlen nach unten durchbiegen; es wäre eine Vertiefung entstanden, welche das Fahrverhalten eines über sie hinwegrollenden Eisenbahnwagenrades sehr stören würde. Aus diesem Grunde werden die Schienen **7a** und **7b** leicht dachfirstartig zusammengestoßen, damit sich nach dem Erkalten fluchtende Schienen oder Schienen mit einer geringfügigen Überhöhung ergeben, welche dann abgeschliffen werden kann.

Die bewegliche, in Schienenlängsrichtung als Schweißvorschubrichtung verschiebbare Baueinheit **5a** ist an vier vertikalen Halteplatten als Halteelementen am Maschinengestell **9** pendelnd gelagert, d. h. aufgehängt. Von den vier Halteplatten, jeweils im Bereich einer äußeren Ecke der Baueinheit **5a**, sind in **Figur 1** nur die zwei an einer Baueinheitseite angeordneten Halteplatten **23a** und **23b** sichtbar. Durch diese "pendelnde" Lagerung kann die bewegliche Baueinheit **5a** und damit die mit ihr gehaltene Schiene **7a** gleit- und haft reibungsfrei, d.h. ruckfrei während des elektrischen Erwärmens bzw. des Abbrennschweißens auf die andere Schiene **7b** mittels vier Kolbenzylindereinheiten **22**, von denen zwei in **Figur 1** zu sehen sind, zu und von ihr weg bewegt werden.

Die Vorschubkraft läßt sich ferner ohne Verfälschung durch Gleit- oder Haftreibung exakt ruckfrei aufbringen. Hierdurch ergibt sich eine ausgezeichnete Qualität der Schweißung. Ein derartig ruckfreies Bewegen sowie exaktes Einstellen der Vorschubkraft war bei den bekannten Schweißmaschinen nicht möglich, da deren bewegliche Baueinheit als ein auf Schienen gleitender Schlitten oder rollender Wagen ausgebildet war, wodurch jedes Mal nach Überwindung einer großen Haftreibung aufgrund des großen zu verschiebenden Schienen- und Baueinheitgewichts (eine Baueinheit hat ein Gewicht von über 10 t und eine Schiene wiegt pro Meter Länge etwa 70 kg) ein Ruck entstand.

Da die Halteplatten eine Länge von etwa einem Meter haben und die Verschiebung der Baueinheit **5a** etwa nur etwa +/- 17 mm beträgt, kann eine minimale vertikale Bewegung der Schiene **7a** während der horizontalen Verschiebung vernachlässigt werden.

Zur Erhöhung der Stabilität der Bewegung der Baueinheit **5a** in Vorschubrichtung der Schiene **7a** sowie insbesondere zur Erhöhung der seitlichen Bewegungsstabilität, ist zusätzlich eine vertikale Versteifungsplatte **25** als Versteifungselement in Verlängerung der Halteplatte **23b** am Maschinengestell **9** am Ort **A** in **Figur 1** angebracht. Wäre die Versteifungsplatte **25** direkt an der Baueinheit **5a** befestigt, so müßten sie sich bei einer horizontalen Bewegung der Baueinheit **5a** zum Längenausgleich geringfügig dehnen. Zur Vermeidung dieser Dehnung ist die Versteifungsplatte **25** an einer annähernd horizontal verlaufenden Verbindungsplatte **27** am Ort **B** in **Figur 1** befestigt, welche in den Bereichen **C** an der Baueinheit **5a** befestigt ist. Je nach Bewegung der Baueinheit **5a** wird die Verbindungsplatte **27** nach unten oder nach oben geringfügig gebogen. Ein seitliches Verschieben der Baueinheit **5a** ist nicht mehr möglich, da die Verwindungssteifigkeit der Verbindungsplatte **27** sowie auch der Versteifungsplatte **25** sehr groß ist.

In der Baueinheit **5a** ist, wie in **Figur 1** dargestellt, die bereits oben erwähnte Abgratvorrichtung **19** angeordnet. Die Abgratvorrichtung **19** hat zwei über Hydraulikpressen **29a** und **29b** zum Schienenkopf **10a** sowie zum Schienenfuß **10b** bewegbare Zangenarme **31a** und **31b**, an deren freien Enden jeweils eines der Abgratmesser **21** angeordnet ist sowie zwei seitliche Abgratmesser für den Schienensteg, von denen in **Figur 1** nur eines mit der Bezugszahl **20** sichtbar ist. Die Abgratvorrichtung **19** ist mit einer weiteren Hydraulikpresse **33** in Schienenlängsrichtung über die Schweißstelle **17** hinaus verschiebbar.

An jeder Baueinheit **5a** und **5b** ist je ein Elektrodenpaar **11** und **13** beidseits der Schweißstelle **17** angeordnet. Die Elektroden **11a** und **11b** sowie **13a** und **13b** jedes Elektrodenpaares **11** und **13** sind senkrecht zu Schienenkopf und -fuß **10a** und **10b** mittels je einer über ein Hebelsystem **35a** und **35b** sowie **36a** und **36b** angreifende Hydraulikpresse **37a** bis **37d** gegen Schienenkopf und -fuß **10a** und **10b** beweg- und preßbar. Die Stromzuführungen **39a** bis **39d** zu den Elektroden **11a**, **11b**, **13a** und **13b** sind in **Figur 1** gestrichelt, da verdeckt, dargestellt.

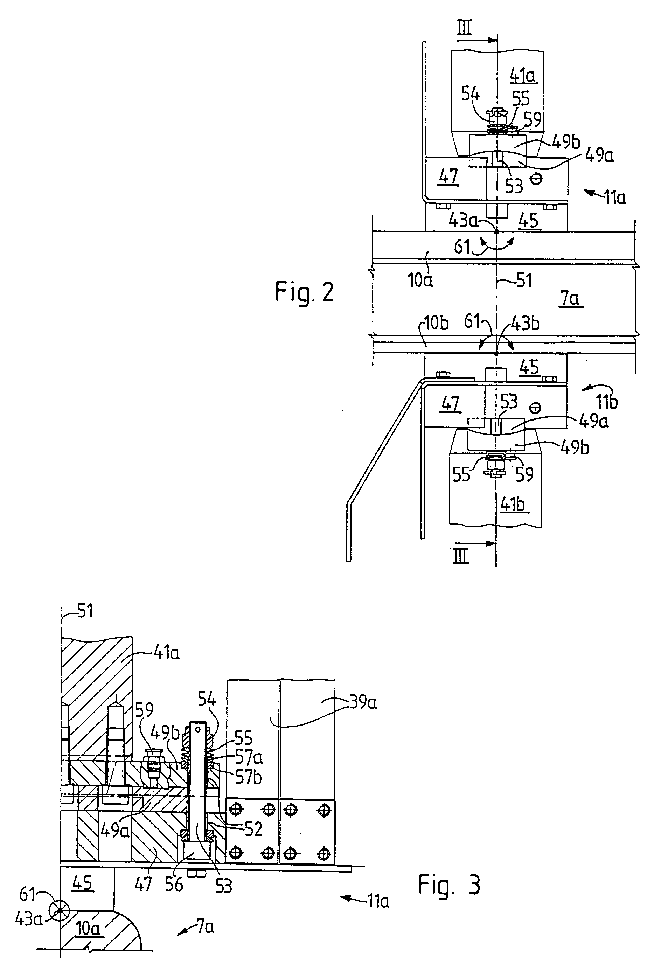

Die großflächig auf der Oberfläche des Schienenkopfes **10a** sowie des Schienenfußes **10b** aufliegenden Elektroden **11a** und **11b** des in **Figur 2** dargestellten Elektrodenpaares **11** sind gelenkig am Elektrodenträger **41a** und **41b** gelagert. Die jeweilige Drehachse, in **Figur 2** mit **43a** bzw. **43b** bezeichnet, liegt auf der jeweiligen Elektrodenoberfläche und somit im angepreßten Zustand der Elektroden **11a** und **11b** auf der Oberfläche des Schienenkopfes **10a** bzw. des Schienenfußes **10b**. Die Verdrehung von Elektroden **11a**, **11b**, **13a** und **13b** liegt im Bereich von einem Grad und wird verwendet, um die beiden Schienenenden der Schienen **7a** und **7b** in einem einstellbaren Winkel von etwas weniger als einhundertachtzig Grad, wie oben dargelegt, aneinander zu stoßen. Jede Elektrode **11a** bzw. **11b** hat einen unmittelbar auf dem Schienenkopf bzw. -fuß **10a** bzw. **10b** aufliegenden Elektrodenkopf **45** und einen Elektrodenhalter **47**.

Der Elektrodenhalter **47** hat auf seiner dem Elektrodenträger **41a** bzw. **41b** zugewandten Seite in Querrichtung zur Schiene **7a** bzw. **7b** symmetrisch zur Achse **51** der Elektrodenträger **41a** und **41b** zwei zylindrische konkav ausgebildete Gleitpaarteile **49a** und die Elektrodenträger **41a** und **41b** zwei hierzupassende zylindrisch konvex ausgebildete Gleitpaarteile **49b** als Gelenkteile. Beide Gleitpaarteile **49a** und **49b** werden als Gleitteilpaar durch je eine mit Spiel in einem Durchgangsloch **52** im konkaven Gleitpaarteil **49b** und im Elektrodenhalter **47** angeordnete Schraube **53** und eine zwischen der Schraubenmutter **54** und der der jeweiligen benachbarten Elektrode **11a**, **11b**, **13a** bzw. **13b** abgewandten Oberfläche des betreffenden Gleitpaarteils **49b** angeordneten Feder **55** unter Federdruck verbunden. Eine Schraubverbindung zwischen dem Gleitpaarteil **49a** und dem Elektrodenhalter **47** ist nicht dargestellt. Um auch den Schrauben **53** eine seitliche Bewegungsmöglichkeit zu ermöglichen, liegt sowohl deren Mutter **54** wie auch deren Schraubenkopf **56** mittels je einer Kugelscheibe **57a** und je einer Kegelpfanne **57b** nach DIN 6319 auf ihrer Auflage auf. Aufgrund dieser Befestigungsart der Elektroden **11a**, **11b**, **13a** und **13b** an den Elektrodenhaltern **47** lassen sich die Elektroden **11a**, **11b**, **13a** und **13b** quer zur Längsrichtung der Schienen **7a** und **7b** schwenken, wie durch die Doppelpfeile **61** in den **Figuren 2** und **3** angedeutet.

Beide Gleitfächen der Gleitpaarteile **49a** und **49b** gleiten unter Gleitreibung aufeinander. Um diese Gleitreibung zu vermindern, sind sie geschmiert. Die Schmierung wird mittels jeweils eines zwischen der Schraube **53** und dem Elektrodenträger **41a** bzw. **41b** angeordneten Schmiernippels **59** oder durch eine Zentralschmierung eingebracht.

Die Stromzuführungen **39a** bis **39d** sind als flexible Strombänder ausgeführt und direkt am jeweiligen Elektrodenhalter **47** befestigt, um einem Stromfluß über die oben beschriebenen Gleitflächen der Gleitpaarteile **49a** und **49b** zu vermeiden. Die Stromzuführungen **39a** bis **39d** sind beidseits der Elektrodenhalter **47** angeordnet, wie in **Figur 3** dargestellt.

Anstelle jeweils beidseits des Elektrodenträgers **41a** und **41b** ein Gleitteilpaar **49a/49b** anzuordnen, kann auch nur ein einziges Gleitteilpaar in der Achse des betreffenden Elektrodenträgers angeordnet werden. Die Gleitflächen der Gleitpaarteile können auch kugelförmig konkav sowie konvex ausgebildet werden, falls eine achsenfrei Schwenkung der Elektroden um einen Drehpunkt gewünscht wird. Eine derartige freie Schwenkung wäre immer dann von Vorteil, wenn die Kontaktgegenfläche des zu verschweißenden Werkstücks beliebige Neigungswinkel im Raum aufweisen soll.

## Patentansprüche

1. Widerstandsschweißmaschine zum Abbrennstumpfschweißen von Schienen **(7a, 7b)** mit
wenigstens einer großflächig an eine der schienen **(7a, 7b)** anzulegenden,
gelenkig an ihrem Träger **(41a, 41b)** gelagerten Elektrode **(11a, 11b, 13a, 13b),**
**dadurch gekennzeichnet**, daß
eine zum Vorschub einer der beiden Schienen **(7a, 7b)** bewegbare Baueinheit **(5a)** zwecks gleit- und haftreibungsfreiem, d. h. ruckfreiem Vorschub der Schiene **(7a)** während des Schweißvorgangs durch fest am Maschinengestell **(9)** und an der Baueinheit **(5a)** befestigte, wenigstens annähernd senkrecht zur Vorschubrichtung angeordnete, elastisch verbiegbare Halteplatten **(23a, 23b)** gehalten, insbesondere in Vorschubrichtung pendelnd aufgehängt ist.

2. Schweißmaschine nach Anspruch 1, **dadurch gekennzeichnet**, daß
die Halteplatten **(23a, 23b)** in Vorschubrichtung hintereinander angeordnet am Maschinengestell **(9)** gehalten sind.

3. Schweißmaschine nach Anspruch 1 oder 2, **dadurch gekennzeichnet**, daß
die Baueinheit **(5a)** gegen ein Ausscheren aus der Vorschubrichtung durch mindestens ein im wesentlichen nur in Vorschuhrichtung auslenkbares Versteifungselement **(25)** gesichert ist, das
im Bereich der Befestigungsstelle eines der Halteelemente **(23b)** fest mit dem Maschinengestell **(9)** und an der anderen Seite mit der Baueinheit **(5a)** verbunden ist.

4. Schweißmaschine nach Anspruch 3, **dadurch gekennzeichnet**, **daß**
das Versteifungselement **(25)** als im wesentlichen nur in Vorschubrichtung elastisch verbiegbare Platte **(25)** ausgebildet ist, die
durch eine im wesentlichen nur senkrecht zur Vorschubrichtung elastisch verbiegbare Verbindungsplatte **(27)** mit dem Maschinengestell **(9)** verbunden ist.

5. Schweißmaschine nach einem der Ansprüche 1 bis 4, **dadurch gekennzeichnet**, daß
die Drehachse **(43a, 43b)** bzw. der Drehpunkt des Gelenks für die Elektrode bzw. Elektroden **(11a, 11b, 13a, 13b)** im Bereich der Elektrodenkontaktfläche liegt.

6. Schweißmaschine nach einem der Ansprüche 1 bis 5, **dadurch gekennzeichnet**, daß
das Gelenk aus mindestens einem Gleitteilpaar mit einem eine konkave Gleitfläche aufweisenden Gleitpaarteil **(49b)** am Elektrodenträger **(41a, 41b)** und einem eine hierzu passende konvexe Gleitfläche aufweisenden Gleitpaarteil **(49a)** an der Elektrode **(11a, 11b, 13a, 13b)** gebildet ist, welche federnd aneinandergepreßt gehalten sind.

7. Schweißmaschine nach Anspruch 6, **dadurch gekennzeichnet**, daß
die beiden Gleitpaarteile **(49a, 49b)** mittels eines mit Spiel durch sie hindurchgeführten Verbindungselements **(53)** zusammengehalten sind, dessen
Kopf- und Fußteil **(56, 54)** je über eine Kugelscheibe **(57a)** und eine Kegelpfanne **(57b)** an der Elektrode **(11a, 11b, 13a, 13b)** bzw. deren Träger **(41a, 41b)** gleitend abgestützt ist, wobei
die Abstützung des Kopf- und/oder Fußteils **(56, 54)** eine Feder **(55)** aufweist, und daß
die Schweißstromzuführung **(39a)** unmittelbar an die Elektrode **(11a, 11b, 13a, 13b)** angeschlossen ist.

8. Widerstandsstumpfschweißmaschine, insbesondere für Eisenhahnschienen **(7a, 7b)**, nach einem der Ansprüche 1 bis 7, **dadurch gekennzeichnet**, daß
das Gelenk aus zwei quer zur Schweißvorschuhrichtung voneinander distanzierten Gleitteilpaaren **(49a, 49b)** gebildet ist, deren
Gleitflächen zylindrisch konkav bzw. zylindrisch konvex geformt sind, wobei
die Gleitflächen eine im Bereich der Elektrodenkontaktfläche liegende, quer zur Schweißvorschubrichtung verlaufende, gemeinsame Zylinderachse **(43a, 43b)** haben.

## Claims

1. Resistance welding machine, in particular for the flash butt welding of rails (7a, 7b), comprising at least one electrode (11a, 11b, 13a, 13b) which is to be applied over a large area to one of the rails (7a, 7b) and is mounted in an articulated manner on its support (41a, 41b), characterised in that a movable component (5a), for the purpose of advancing one of the two rails (7a, 7b), is, for the purpose of advancing the rail (7a) during the welding process in a manner which is free from sliding friction or static friction, i.e. smooth, retained by means of resiliently flexible retaining plates (23a, 23b) which are secured securely on the machine frame (9) and on the component (5a) and disposed at least nearly perpendicular to the direction of advancement, and is, in particular, suspended in an swinging manner in the direction of advancement.

2. Welding machine according to Claim 1, characterised in that the retaining plates (23a, 23b) are retained on the machine frame (9) disposed behind one another in the direction of advancement.

3. Welding machine according to Claim 1 or Claim 2, characterised in that the component (5a) is secured against a deflection from the direction of advancement by at least one reinforcing element (25) which can substantially only be deflected in the direction of advancement and which is connected securely to the machine frame (9) in the vicinity of the securing point of one of the retaining elements (23b), and, on the other side, to the component (5a).

4. Welding machine according to Claim 3, characterised in that the reinforcing element (25) is formed as a plate (25) which is resiliently flexible, substantially only in the direction of advancement, and which is connected to the machine frame (9) by means of a connection plate (27) which is resiliently flexible substantially only in the direction which is perpendicular to the direction of advancement.

5. Welding machine according to one of Claims 1 to 4, characterised in that the axis of rotation (43a, 43b) or the point of rotation of the joint for the electrode or electrodes (11a, 11b, 13a, 13b) is in the vicinity of the electrode contact surface.

6. Welding machine according to any one of Claims 1 to 5, characterised in that the joint is formed of at least one pair of sliding parts, one part (49b) of the sliding pair having a concave sliding surface formed on the electrode carrier (41a, 41b) and one part of the sliding pair (49a) having a convex sliding surface which is complementary thereto formed on the electrode (11a, 11b, 13a, 13b), which parts are retained pressing against one another in a resilient manner.

7. Welding machine according to Claim 6, characterised in that the two sliding pair parts (49a, 49b) are held together by means of a connection element (53) which is passed through them, the head and foot parts (56, 54) of which are, in each case, supported in a sliding manner via a semi-spherical washer (57a) and a ball cup (57b) on the electrode (11a, 11b, 13a, 13b) or the carrier (41a, 41b) thereof, wherein the support of the head and/or foot part (56, 54) comprises a spring (55); and in that the welding current supply (39a) is connected directly to the electrode (11a, 11b, 13a, 13b).

8. Resistance butt welding machine, in particular for railway rails (7a, 7b), according to any one of Claims 1 to 7, characterised in that the joint consists of two pairs (49a, 49b) of sliding parts distanced from one anther transverse to the direction of advancement of the welding, the sliding surfaces are formed so as to be cylindrically concave or cylindrically convex, wherein the sliding surfaces have a common cylindrical axis (43a, 43b) which is located in the vicinity of the contact surface of the electrode and extends transverse to the direction of advancement of the welding.

## Revendications

1. Machine de soudage par résistance pour le soudage par résistance par fusion de rails (7a, 7b), comprenant au moins une électrode (11a, 11b, 13a, 13b) montée de façon articulée sur son support (41a, 41b) et appliquée par une grande surface sur l'un des rails (7a, 7b),
caractérisée en ce qu'un dispositif mobile (5a) pour faire avancer l'un des deux rails (7a, 7b) est suspendu de façon pendulaire en particulier dans la direction de l'avance en vue de faire avancer sans friction de glissement et sans friction par adhérence, c'est-à-dire sans à-coups, le rail (7a) pendant le processus de soudage, et maintenu par des plaques de retenue (23a, 23b) susceptibles de s'infléchir élastiquement, fixées fermement au châssis (9) de la machine et au dispositif (5a), et disposées au moins sensiblement verticalement par rapport à la direction de l'avance.

2. Machine de soudage selon la revendication 1,
caractérisée en ce que les plaques de retenue (23a, 23b) sont disposées l'une à la suite de l'autre sur le châssis (9) de la machine dans la direction de l'avance.

3. Machine de soudage selon la revendication 1 ou 2,
caractérisée en ce que le dispositif d'assemblage (5a) est protégé vis-à-vis d'un déboîtement par rapport au dispositif d'avance par au moins un élément de renforcement (25) pouvant être déplacé sensiblement seulement dans la direction de l'avance, et qui est relié fermement au châssis (9) de la machine dans la zone de la position de fixation de l'un des éléments de retenue (23b) et sur l'autre côté au dispositif d'assemblage (5a).

4. Machine de soudage selon la revendication 3,
caractérisée en ce que l'élément de renforcement (25) est constitué par une plaque (25) pouvant s'infléchir élastiquement sensiblement seulement dans la direction de l'avance, qui est reliée au châssis (9) de la machine par une plaque de liaison (27) pouvant s'infléchir élastiquement sensiblement seulement perpendiculairement à la direction de l'avance.

5. Machine de soudage selon l'une des revendications 1 à 4, caractérisée en ce que l'axe de rotation (43a, 43b) ou le point de rotation de l'articulation de la ou des électrodes (11a, 11b, 13a, 13b) est situé sensiblement sur la surface de contact des électrodes.

6. Machine de soudage selon l'une des revendications 1 à 5, caractérisée en ce que l'articulation est constituée par au moins une paire de coussinets comprenant un coussinet (49b) à surface de glissement concave sur le support d'électrode (41a, 41b) et un coussinet (49a) à surface de glissement convexe adaptée sur l'électrode (11a, 11b, 13a, 13b), qui sont maintenus pressés élastiquement l'un contre l'autre.

7. Machine de soudage selon la revendication 6,
caractérisée en ce que les deux coussinets (49a, 49b) sont maintenus assemblés par un élément de liaison (53) les traversant avec jeu, dont la partie de tête (56) et la partie de pied (54) sont chacune supportées de façon glissante respectivement par un disque sphérique (57a) et une cuvette conique (57b) sur les électrodes (11a, 11b, 13a, 13b) ou sur leur support (41a, 41b), le support de la partie de tête et/ou de la partie de pied (56, 54) comprenant un ressort (55), et l'amenée de courant de soudage (39a) étant directement raccordée à l'électrode (11a, 11b, 13a, 13b).

8. Machine de soudage en bout à bout par résistance, notamment pour des rails de chemins de fer (7a, 7b) selon l'une des revendications 1 à 7,
caractérisée en ce que l'articulation est constituée par deux coussinets (49a, 49b) à distance l'un de l'autre transversalement à la direction de l'avance des rails, dont les surfaces de glissement sont de constitution cylindriquement concave ou cylindriquement convexe, les surfaces de glissement comportant un axe de cylindre commun (43a, 43b) situé sensiblement sur la surface de contact des électrodes, et s'étendant transversalement à la direction d'avance du soudage.
